# FASCICULE DE BREVET EUROPEEN

(11) **EP 3 707 982 B1**
(45) Date de publication et mention de la délivrance du brevet: **07.10.2026**
(21) Numéro de dépôt: 20162509.2
(22) Date de dépôt: 11.03.2020
(51) Int. Cl.: A01B 73/04, A01D 75/30

(54) **MACHINE AGRICOLE PLIABLE**
FALTBARE LANDWIRTSCHAFTLICHE MASCHINE
FOLDABLE AGRICULTURAL MACHINE

(30) Priorité: 13.03.2019 FR 1902561
(43) Date de publication de la demande: 16.09.2020
(73) Titulaire: Kuhn SAS, 67700 Saverne (FR)
(72) Inventeur: HUSSON, Geoffroy, 67700 OTTERSTHAL (FR)
(74) Mandataire: Hager, Esther Evelyne

(56) Documents cités:
- FR-A1- 2 805 434
- US-A1- 2014 033 671
- US-A1- 2018 263 169

## Description

La présente invention se rapporte au domaine technique général du machinisme agricole. Elle se rapporte plus particulièrement à une machine agricole de fauchage permettant de faucher des végétaux sur pieds, destinée à être attelée à un tracteur et comportant deux unités latérales et un châssis qui s'étend dans une direction longitudinale et est muni de deux roues, chaque unité latérale étant montée pivotante par rapport au châssis via une articulation longitudinale respective autour d'un axe de pliage respectif parallèle à un plan médian du châssis, chaque unité latérale comportant un groupe d'outils relié au châssis par un bras respectif et pouvant occuper une position de travail dans laquelle elle prend appui sur le sol et dans laquelle la longueur du groupe d'outils respectif s'étend transversalement à la direction longitudinale, chaque unité latérale pouvant également occuper une position de transport dans laquelle elle est éloignée du sol, et dans laquelle la longueur et la largeur du groupe d'outils respectif sont sensiblement parallèles au plan médian.

Une telle machine agricole est connue du document EP 3 028 557 A1. Cette machine agricole comporte deux unités latérales et un châssis doté de roues. Chaque unité latérale comprend un groupe d'outils respectif relié au châssis par un bras respectif. Chacune des unités latérales est montée pivotante par rapport au châssis via une articulation longitudinale autour d'un axe de pliage parallèle à un plan médian du châssis. Pour le transport hors des champs, les unités latérales sont repliées de sorte que la longueur et la largeur des groupes d'outils se retrouvent sensiblement parallèles au plan médian, de sorte à respecter le gabarit routier. Lors de la transposition des unités latérales entre position de travail et position de transport, chaque unité latérale est pivotée autour de l'axe de pliage respectif dans le sens allant dudit groupe d'outils vers le bras respectif. Les groupes d'outils sont par conséquent situés sur l'extérieur de la machine en position de transport, éloignant ainsi leur centre de gravité du plan médian. Une telle caractéristique induit un risque de basculement selon un axe parallèle à la direction longitudinale, notamment dans les courbes et/ou les devers, ce qui peut entrainer des dégâts sur la machine et le tracteur auquel elle est attelée, ainsi que des blessures de l'utilisateur ou de personnes environnantes. Une machine telle que décrit plus haut est également connue des documents US 2014033671 A1, US2018263169 A1 et FR 2805434 A1.

Le but de la présente invention est de proposer une machine agricole dont la sécurité en position de transport des groupes d'outils est améliorée.

Cet objectif est atteint grâce à l'articulation d'au moins un basculeur avec le châssis autour d'au moins un axe de basculement orienté transversalement à la direction longitudinale, et par le fait que dans la position de transport des unités latérales chaque groupe d'outils est plus proche du plan médian que le bras respectif, ainsi que la partie caractérisante de la revendication 1.

Grâce à cette caractéristique, en position de transport, le centre de gravité de chaque groupe d'outils est rapproché du plan médian. Cette machine est alors plus stable dans sa position transport, ce, tout en conservant des dimensions réduites de la machine dans cette position de manière à respecter le gabarit routier.

D'autres caractéristiques et avantages de l'invention ressortiront de la description ci-après avec référence aux dessins annexés qui représentent, à titre d'exemple non limitatif, plusieurs formes de réalisation de la machine agricole selon l'invention.

### Brève description des dessins

[Fig. 1] représente une vue en perspective d'une machine selon l'invention en position de travail des unités latérales et attelée à un tracteur à l'avant duquel est également attelé un équipement frontal.
[Fig. 2] représente une vue de dessus d'une machine selon l'invention en position de travail des unités latérales.
[Fig. 3] représente une vue latérale d'une machine selon l'invention en position de transport des unités latérales
[Fig. 4] représente une vue de face d'une machine selon l'invention en position de travail des unités latérales.
[Fig. 5] représente une vue de face de la machine en position de manœuvre des unités latérales.
[Fig. 6] représente une vue latérale d'une machine selon l'invention en position de travail des unités latérales.
[Fig. 7] représente une vue latérale d'une machine selon l'invention en position transitoire des unités latérales.

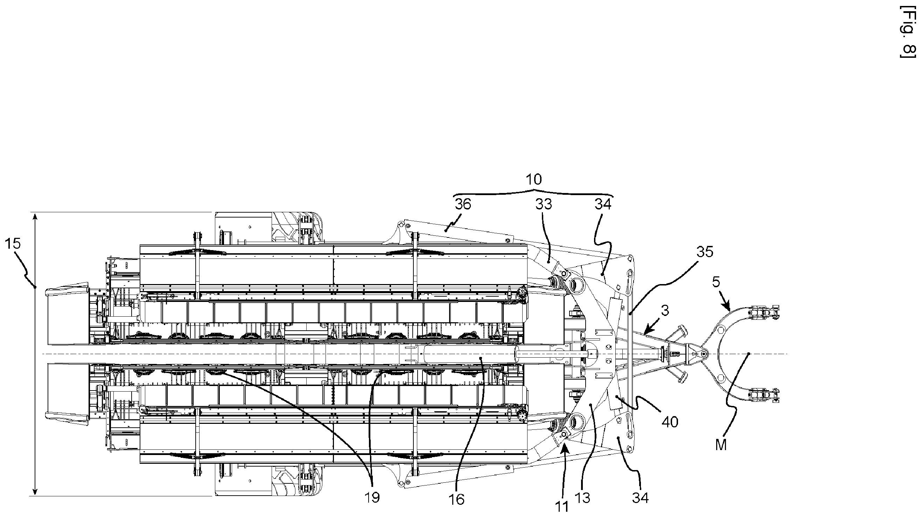

[Fig. 8] représente une vue de dessus d'une machine selon l'invention en position de transport des unités latérales.

Dans la description qui suit, les notions « inférieure » et « supérieure » sont définies par rapport au sol (S), et les notions « avant », « arrière », « devant » et « derrière » sont définies en regardant dans un sens d'avance (A). Dans cette description, à moins d'une indication contraire, les orientations décrites, notamment d'axes et de plans, sont à considérer lorsque la machine (1) et le tracteur (2) se déplacent de manière rectiligne dans le sens d'avance (A) sur un sol (S) plat et horizontal, tel que sur les figures annexées.

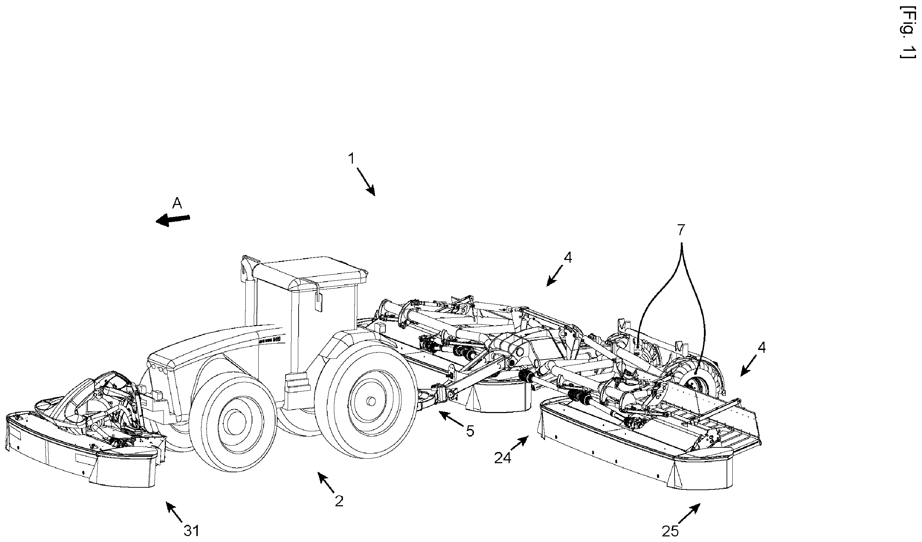

Ainsi qu'il ressort de la figure 1, la machine (1) agricole est destinée à être attelée à un tracteur (2). Elle fait ainsi partie d'un ensemble roulant composé par ladite machine (1) et le tracteur (2). Le tracteur (2) est apte à déplacer la machine (1) dans un sens d'avance (A) et à l'animer. La machine (1) comporte un châssis (3) et deux unités latérales (4). Elle comporte également un dispositif d'attelage (5) destiné à la raccorder au tracteur (2). Le dispositif d'attelage (5) est de préférence situé à l'extrémité avant du châssis (3) qui est situé derrière le tracteur (2) lorsque la machine (1) y est raccordée. Le dispositif d'attelage (5) comporte deux tourillons inférieurs conçus pour venir s'accrocher aux bras d'attelage inférieurs du tracteur (2). Le châssis (3) est en outre articulé avec le dispositif d'attelage (5) autour d'un axe d'attelage (6) sensiblement vertical, et de préférence légèrement incliné vers l'avant. Cet axe d'attelage (6) permet à la machine (1) de suivre le tracteur (2) sans riper sur le sol (S), ce qui détériore le tapis végétal et induit un effort de flexion important dans le châssis (3).

Le châssis (3) est muni d'au moins deux roues (7). Elles sont montées pivotantes avec le châssis (3) autour d'un axe de roulement (8) afin de reporter une partie du poids de la machine (1) sur le sol (S) et de faciliter son déplacement dans la direction d'avance (A). L'axe de roulement (8) est perpendiculaire à la direction d'avance (A).

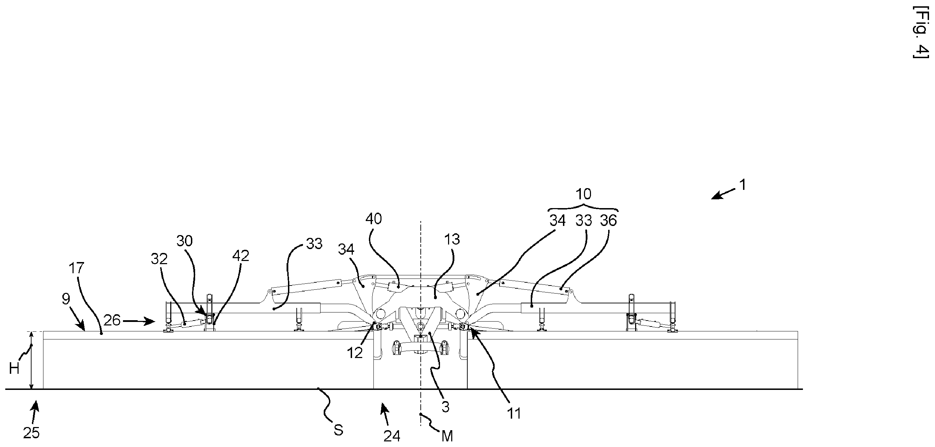

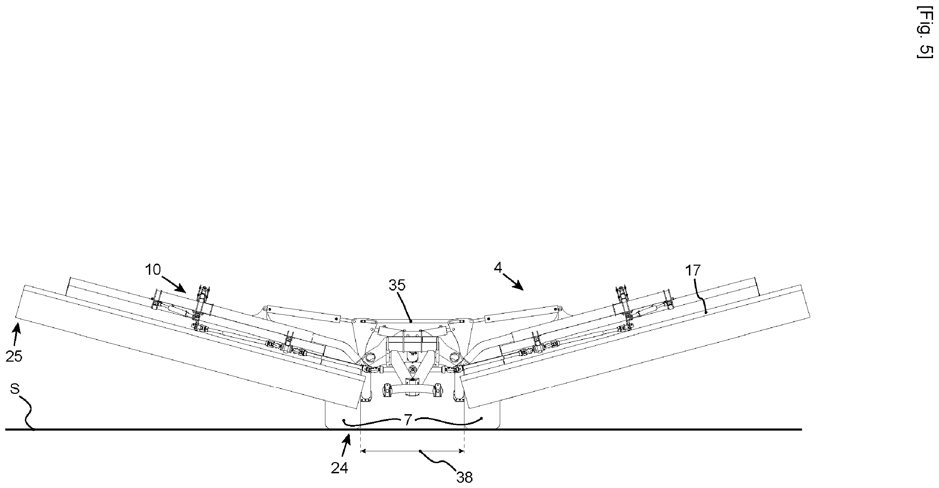

Chaque unité latérale (4) comporte un groupe d'outils (9) et un bras (10). Chaque groupe d'outils (9) est relié au châssis (3) par le bras (10) respectif. Chaque unité latérale (4), respectivement chaque bras (10), est monté(e) pivotant(e) par rapport au châssis (3) via une articulation longitudinale (11) respective autour d'un axe de pliage (12) respectif. Chaque groupe d'outils (9) est de forme allongée et peut être assimilé à un quadrilatère, tels que représentés sur les figures 4 et 5.

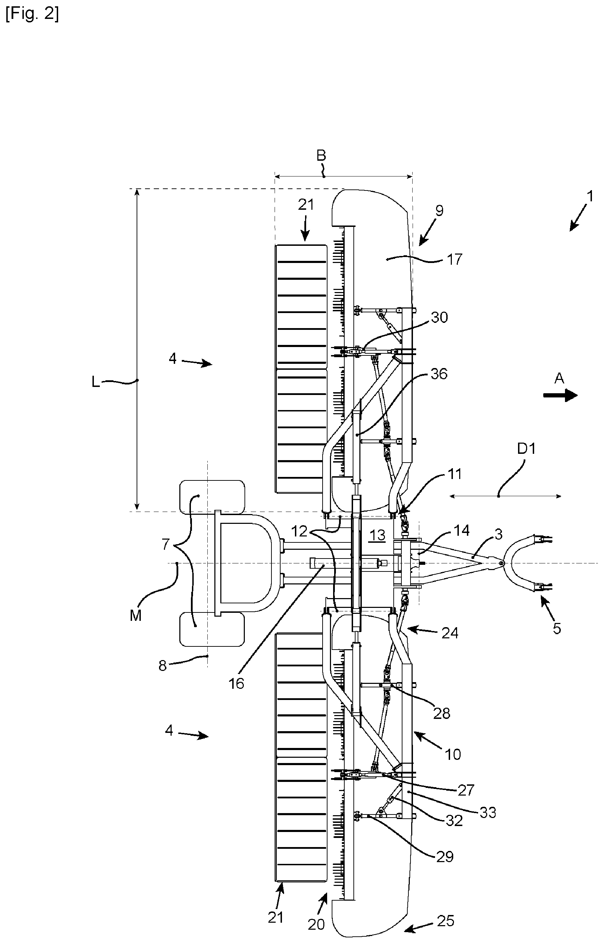

Comme il ressort de la figure 2, le châssis (3) s'étend dans la direction longitudinale (D1). La direction longitudinale (D1) est parallèle au sens d'avance (A) et/ou orthogonale à l'axe de roulement (8). Le châssis (3) présente un plan médian (M). Le plan médian (M) est orienté parallèlement à la direction longitudinale (D1) et de préférence verticalement et/ou perpendiculaire à l'axe de roulement (8). Le plan médian (M) passe par l'axe d'attelage (6). Les unités latérales (4) peuvent être symétriques par rapport au plan médian (M). Dans ce document, la notion « intérieur » désigne une partie d'un élément située plus proche du plan médian qu'une partie « extérieure ».

Chaque unité latérale (4) peut occuper une position de travail dans laquelle elle, respectivement le groupe d'outils (9) respectif, prend appui sur le sol (S). La longueur (L) est la plus importante dimension d'un groupe d'outils (9). Telle que représentée figure 2, la longueur (L) d'un groupe d'outils (9) en position de travail s'étend transversalement, et de préférence orthogonalement en vue de dessus, à la direction longitudinale (D1). La largeur (B) d'un groupe d'outils (9) est la dimension d'un groupe d'outils (9) en position de travail orientée parallèlement à la direction longitudinale (D1).

Chaque axe de pliage (12) est parallèle au plan médian (M), au moins dans la position de travail de l'unité latérale (4) respective. Dans le mode de réalisation préféré, chaque axe de pliage (12) est parallèle à la direction longitudinale (D1) au moins en position de travail de l'unité latérale (4) respective. Chaque articulation longitudinale (11) est décalée d'un côté respectif par rapport au plan médian (M). Les articulations longitudinales (11) sont situées entre l'axe de roulement (8) et le dispositif d'attelage (5) en vue latérale, de sorte à répartir le poids des unités latérales (4) entre le tracteur (2) et les roues (7).

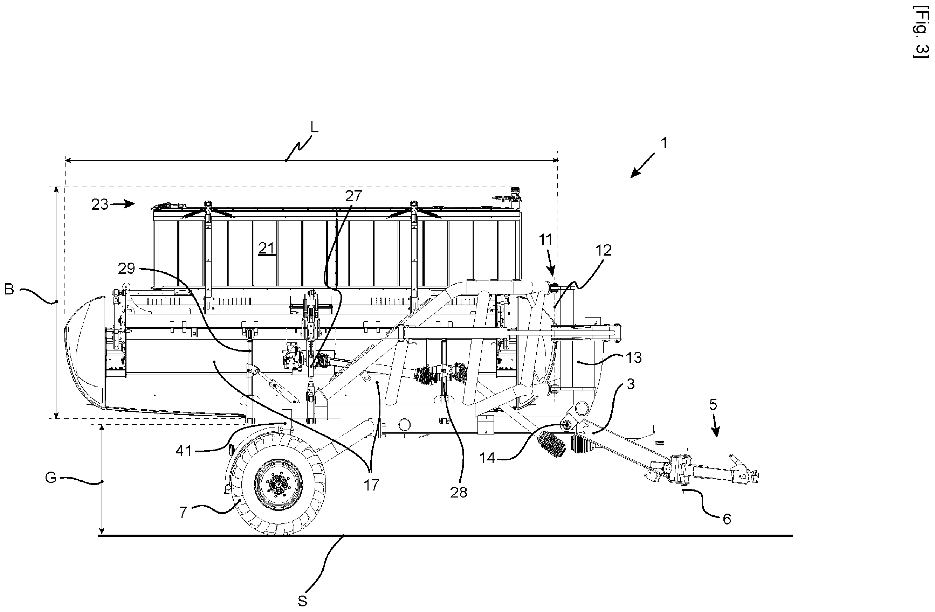

Ainsi qu'il est représenté sur la figure 3, chaque unité latérale (4) peut également occuper une position de transport dans laquelle elle est éloignée du sol (S). La longueur (L) d'un groupe d'outils (9) en position de transport est sensiblement parallèle au plan médian (M), et de préférence sensiblement parallèle à la direction longitudinale (D1). Dans cette position, la largeur (B) du groupe d'outils (9) est sensiblement parallèle au plan médian (M), et de préférence sensiblement orthogonale à la direction longitudinale (D1).

Dans ce document, lorsqu'il est fait référence à une position de travail, respectivement de transport, il est fait référence à ladite position de l'unité latérale (4) correspondante. Par exemple, la position de travail d'un groupe d'outils (9) est la même que la position de travail de l'unité latérale (4) respective.

Une importante caractéristique de l'invention consiste en ce que la machine comporte au moins un basculeur (13) articulé avec le châssis (3) autour d'au moins un axe de basculement (14) orienté transversalement à la direction longitudinale (D1), et en ce qu'en position de transport des unités latérales (4), chaque groupe d'outils (9) est plus proche du plan médian que le bras (10) respectif.

Avec une telle conception, le centre de gravité de chaque groupe d'outils (9) est rapproché du plan médian (M) en position de transport, ce qui diminue le risque de basculement autour d'un axe parallèle à la direction longitudinale (D1). Le poids d'un groupe d'outils (9) étant supérieur à celui d'un bras (10), le centre de gravité de chaque unité latérale (4) est également rapproché du plan médian (M) en position de transport des groupes d'outils (9). La machine (1) est ainsi plus stable lors de ses déplacements en position de transport des unités latérales (4) dans les courbes et les devers, améliorant ainsi la sécurité de ce type de machine (1).

Le au moins un basculeur (13) est articulé avec le châssis (3) selon l'au moins un axe de basculement (14) orienté transversalement à la direction longitudinale (D1), et de préférence orthogonalement au plan médian (M). Le au moins un basculeur (13) peut être pivoté avec au moins une unité latérale (4) montée sur ledit basculeur (13) par le biais d'une articulation longitudinale (11).

De manière simple, la machine (1) comporte un basculeur (13) commun aux deux unités latérales (4). Chaque unité latérale (4) est montée sur un côté respectif dudit basculeur (13) (commun) par le biais de l'articulation longitudinale (11) respective. Le pivotement du basculeur (13) autour de l'axe de basculement (14) implique le pivotement simultané des unités latérales (4). Selon une alternative non représentée, chaque unité latérale (4) pourrait également être solidaire d'une partie respective du basculeur (13), autour d'un axe de basculement (14) respectif ou non.

Un actionneur transitoire (16) est fixé de manière articulée avec, et de préférence sur, le basculeur (13). A son autre extrémité, l'actionneur transitoire (16) est fixé de manière articulée avec, et de préférence sur, le châssis (3). Une variation de la longueur de l'actionneur transitoire (16) fait pivoter le basculeur (13) autour de l'axe de basculement (14) conjointement avec les unités latérales (4). Le basculeur (13) peut ainsi être pivoté, de préférence vers le haut, de façon à atteindre une position dans laquelle les axes de pliage (12) sont sensiblement verticaux. Chaque unité latérale (4) est alors pivotable autour de l'axe de pliage (12) respectif dans le sens allant, en vue de dessus, du bras (10) respectif vers ledit groupe d'outils (9), et de préférence vers l'arrière. Chaque unité latérale (4) est donc pivotable autour de l'axe de pliage (12) respectif jusqu'à une position où le groupe d'outils (9) respectif est plus proche du plan médian (M) que le bras (10) respectif. Dans la position de transport des unités latérales (4), chaque groupe d'outils (9) est ainsi plus proche du plan médian (M) que le bras (10) respectif.

Tel qu'illustré sur la figure 2, l'axe de basculement (14) est situé à l'avant ou devant les articulations longitudinales (11), au moins en position de travail des unités latérales (4). Il ressort également de cette figure 2 que l'axe de basculement (14) est situé à l'avant, et de préférence à l'extrémité avant, du basculeur (13). Cette caractéristique permet d'éloigner du sol (S), dans leur position de transport, l'intégralité des unités latérales (4), et de préférence les articulations longitudinales (11), et d'augmenter ainsi la garde au sol (G) dans cette position. La garde au sol (G) est définie par la distance minimale entre le sol (S) et les unités latérales (4). La machine (1) peut ainsi avantageusement franchir un fossé ou un ralentisseur de type dos d'âne de hauteur importante sans risquer d'être endommagée. Sur les figures 2 et 3, chaque articulation longitudinale (11) est réalisée par une liaison pivot. Dans une variante, chaque articulation longitudinale (11) pourrait également être réalisée par deux rotules et autoriser au moins un autre degré de liberté entre le châssis (3) et chaque unité latérale (4).

Tel qu'il est visible sur la figure 3, l'axe de basculement (14) est positionné au dessus des roues (7), ce qui permet aux unités latérales (4) d'être au moins partiellement plus haut que les roues (7) dans leur position de transport, réduisant la largeur (15) de la machine (1). La largeur (15) est la dimension de la machine (1) selon la direction perpendiculaire au plan médian (M).

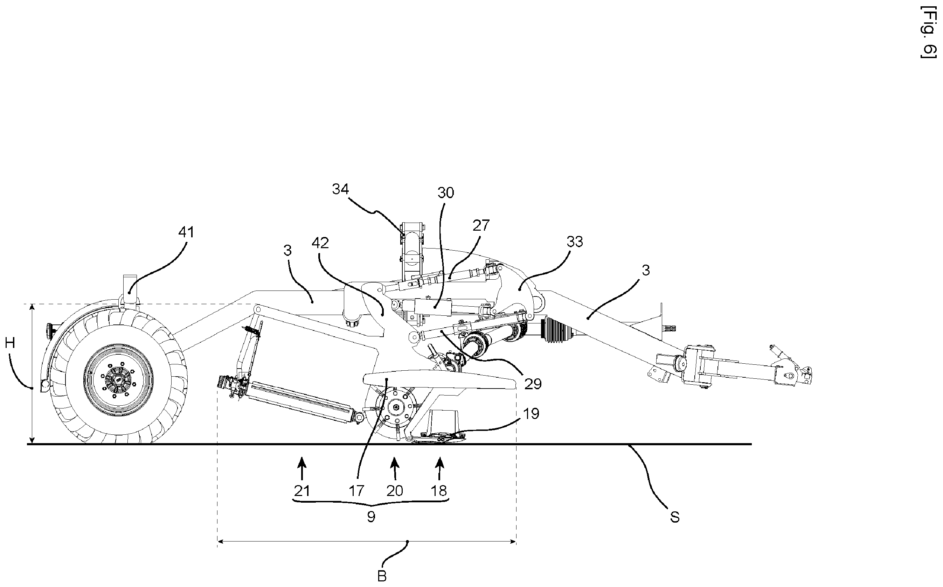

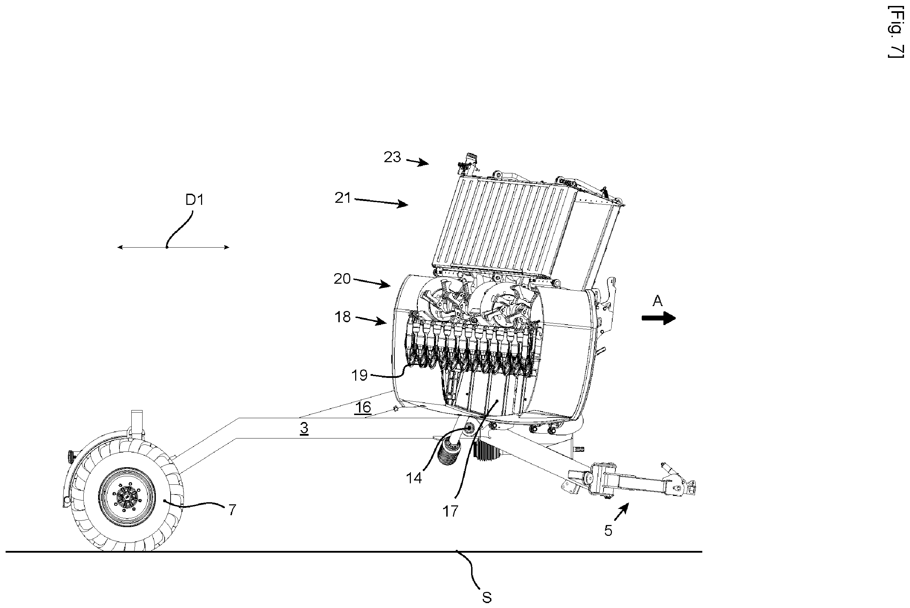

La machine (1) agricole est une machine (1) de fauchage permettant de faucher des végétaux sur pieds. Dans ce cas, un groupe d'outils (9) comporte au moins un dispositif de fauche (18). Dans les modes de réalisation représentées sur les figures 6 et 7, chaque dispositif de fauche (18) est équipé d'une pluralité de rotors (19), tels que des disques et/ou des tambours. Lorsque la machine (1) est animée par le tracteur (2), les rotors (19) d'au moins un dispositif de fauche (18) sont entrainés en rotation autour d'axes sensiblement verticaux. Les rotors (19) sont munis de couteaux qui s'étendent au-delà de la périphérie des rotors (19). Les rotors (19) d'un même groupe de fauche (18) sont disposés à intervalles plus ou moins réguliers. De plus, les rotors (19) sont agencés de sorte que leurs trajectoires de travail se chevauchent. Cela signifie que les couteaux d'un rotor (19) décrivent une trajectoire traversée par la trajectoire des couteaux d'un rotor (19) adjacent. Les rotors (19) sont entrainés en rotation au moyen d'un train de pignons incorporés dans un carter étanche contenant un lubrifiant. Grâce à l'avance de la machine (1) et à la rotation des couteaux, ces derniers sectionnent les végétaux. Tous les rotors (19) d'une unité latérale (4), et de préférence des deux unités latérales (4), forment une ligne perpendiculaire à la direction longitudinale (D1) en position de travail du, respectivement des, groupe(s) d'outils (9). Le groupe d'outils (9) pourrait également comporter un broyeur, un dispositif de ramassage tel un pickup ou des instruments de travail du sol, comme par exemple une herse rotative.

Chaque groupe d'outils (9) peut également comporter au moins un conditionneur (20) situé, en position de travail du groupe d'outils (9) respectif et vu dans le sens d'avance (A), derrière le dispositif de fauche (18). Le conditionneur (20) permet d'accélérer le séchage des végétaux fauchés. Il peut par exemple être réalisé sous la forme d'un rouleau à doigt, ou encore de deux rouleaux à reliefs interpénétrant.

Comme il ressort des figures 2 et 6, chaque groupe d'outils (9) comporte également une protection (17). Chaque groupe d'outils (9) est couvert, au moins partiellement, par la protection (17) dans sa position de travail. Dans le cas d'une machine (1) de fauchage, la protection (17) recouvre la totalité du groupe de fauche (18), et de préférence au moins la moitié du conditionneur (20), le cas échéant. La protection (17) peut également couvrir, au moins partiellement, le devant et les côtés de chaque groupe d'outils (9). La protection (17) peut être réalisée sous la forme d'une bâche souple, par exemple en matière plastique ou fibres de carbone, par des tôles métalliques ou par une combinaison de ces matières. Comme il ressort de la figure 3, en position de transport des unités latérales (4), les protections (17) sont sur les faces externes de la machine (1). Les protections (17) situées de part et d'autre de la machine (1), de préférence latéralement, empêchent avantageusement l'accès à l'intérieur des groupes d'outils (9) aux personnes alentour, améliorant ainsi la sécurité de la machine (1) dans leur position de transport.

Chaque groupe d'outils (9) comporte au moins un groupeur (21). Ce groupeur (21) est situé, vu dans le sens d'avance (A) et dans la position de travail, derrière le groupe de fauche (18), et de préférence derrière le conditionneur (20) le cas échéant. Le groupeur (21) permet de déplacer des végétaux fauchés dans un sens orienté transversalement, et de préférence perpendiculairement, au sens d'avance (A). Le groupeur (21) permet de rassembler les végétaux fauchés sur une largeur moindre que la largeur (B) du groupe d'outils (9). Les groupeurs (21) rassemblent les végétaux entre les deux groupes d'outils (9). Chaque groupeur (21) est monté sur le groupe d'outils (9), respectivement sur un bâti (42), et de préférence de manière mobile, au moins latéralement, par rapport au groupe d'outils (9) en position de travail.

Tel que représenté sur la figure 3, chaque groupeur (21) est de type convoyeur à bande sans fin. Il pourrait également être réalisé sous la forme d'un tunnel d'éjection formé par une paroi horizontale en position de travail de l'unité latérale (4) respective, sous laquelle sont montées deux parois latérales se rapprochant à l'arrière. On note que le groupeur (21) est plus léger que le dispositif de fauche (18), ou que l'outil (broyeur ou pickup) du groupe d'outils (9) monté devant lui le cas échéant. Il ressort de la figure 3 que chaque groupeur (21) est situé au dessus du groupe d'outils (9) respectif en position de transport. La partie la plus lourde de l'unité latérale (4) étant ainsi plus proche du sol (S), il en résulte qu'en position de transport des unités latérales (4), le centre de gravité de la machine (1) est plus proche du sol (S), améliorant ainsi la stabilité de la machine (1) lors de ses déplacements, particulièrement lors de courbes et/ou en devers. Une telle caractéristique améliore ainsi avantageusement la sécurité de la machine (1).

Une solution alternative ou supplémentaire pour améliorer la stabilité de la machine (1) serait d'augmenter la voie (38) de la machine (1). La voie (38) est la distance entre les deux roues (7) selon l'axe de roulement (8). Une autre solution alternative ou supplémentaire serait d'augmenter la largeur des roues (7), c'est-à-dire leur dimension selon l'axe de roulement (8). Bien entendu, la comparaison de la stabilité est définie pour une même voie (38) et une même largeur de roues (7).

Chaque unité latérale (4) comporte un moyen de liaison (26) respectif qui relie le groupe d'outils (9) au bras (10) respectif. Afin de pouvoir déplacer le groupe d'outils (9) par rapport au bras (10), le moyen de liaison (26) comporte au moins deux bielles (27, 28, 29) et au moins un actionneur (30, 32).

Les bielles (27, 28, 29) sont de préférence au nombre de trois, à savoir une bielle supérieure (27), une bielle intérieure (28) et une bielle extérieure (29). Les bielles intérieure (28) et extérieure (29) sont également désignées comme « bielles inférieures (28,29) ». Chaque bielle (27, 28, 29) est articulée avec le bras (10) respectif d'une part, et au groupe d'outils (9) respectif d'autre part. Toutes les bielles (27, 28, 29) prises deux par deux forment avec le bras (10) et le groupe d'outils (9) respectif un quadrilatère déformable.

Chaque unité latérale (4) comporte le bâti (42) qui relie le groupe d'outils (9) au dispositif de liaison (26) respectif. Les bielles (27, 28, 29) sont directement articulées avec le bâti (42). Le bâti (42) est fixé rigidement avec le groupe d'outils (9) respectif, et permet de le supporter.

Les articulations des bielles (27, 28, 29) avec le groupe d'outils (9), respectivement avec le bâti (42), et le bras (10) sont telles qu'elles autorisent au moins un pivotement autour d'axes orthogonaux au plan médian (M) en position de travail de l'unité latérale (4) respective. **Il** ressort de la figure 6 que la bielle supérieure (27) forme avec le bras (10), le groupe d'outils (9) et au moins une bielle inférieure (28, 29), et de préférence chacune, un quadrilatère déformable dit d'allégement, en projection sur le plan médian (M).

Le moyen de liaison (26) comporte un actionneur d'allégement (30). Chaque actionneur d'allégement (30) est articulé avec deux côtés d'un des quadrilatères d'allégement respectif. Ainsi que représenté sur la figure 6, dans un mode de réalisation préféré, chaque actionneur d'allégement (30) est articulé avec le bras (10) et le groupe d'outils (9) respectif. Une variation de la longueur de l'actionneur d'allégement (30) modifie la distance entre le groupe d'outils (9) et le bras (10).

Chaque actionneur d'allégement (30) est de longueur fixe dans toutes les positions excepté en position de travail du groupe d'outils (9) respectif, où il est monté flottant. Ce montage flottant permet au groupe d'outils (9) de se déplacer verticalement par rapport au bras (10) associé. Chaque groupe d'outils (9) peut ainsi suivre les dénivellations du sol (S) indépendamment de son bras (10).

Chaque actionneur d'allégement (30) est relié hydrauliquement à un accumulateur de pression afin d'amortir les mouvements du groupe d'outils (9) respectif en position de travail par rapport au bras (10) associé. Chaque actionneur d'allégement (30) permet de reporter au moins une partie du poids du groupe d'outils (9) respectif sur le châssis (3). De cette manière, chaque groupe d'outils (9) en position de travail ne prend appui sur le sol (S) que partiellement, permettant de diminuer la détérioration du tapis végétal du sol (S).

Les bielles (27, 28, 29) respectives sont parallèles entre elles en projection sur le plan médian (M). Chaque quadrilatère d'allégement est ainsi un parallélogramme, ce qui permet de conserver l'orientation du dispositif de fauche (18) par rapport au sol (S) en vue latérale, lors du déplacement vertical de ce dernier par rapport au bras (10). Une telle caractéristique assure une fauche régulière.

Les articulations des bielles (27, 28, 29) avec le groupe d'outils (9) et le bras (10) respectif sont telles qu'elles autorisent au moins un pivotement autour d'axes sensiblement parallèles au plan médian (M), et de préférence sensiblement orthogonaux à la direction longitudinale (D1), en position de travail du groupe d'outils (9) respectif. Chaque articulation des bielles (27, 28, 29) avec le bras (10) respectif ainsi qu'avec le groupe d'outils (9) respectif peuvent être de type cardan ou rotule. Il ressort de la figure 2 que chaque paire de bielles (27, 28, 29) forme avec le bras (10) et le groupe d'outils (9) respectifs un quadrilatère déformable dit de recouvrement, en projection sur un plan orthogonal au plan médian (M) et parallèle à la direction longitudinale (D1).

Chaque moyen de liaison (26) comporte un actionneur de recouvrement (32). Chaque actionneur de recouvrement (32) est articulé avec deux côtés d'un des quadrilatères de recouvrement respectif. Comme il ressort de la figure 2, chaque actionneur de recouvrement (32) est de préférence articulé avec le bras (10) associé, respectivement la potence (33) respective, et avec la bielle extérieure (29) respective. Une variation de la longueur de l'actionneur de recouvrement (32) modifie la distance entre le groupe d'outils (9) et l'axe de pliage (12) respectifs, selon la longueur dudit groupe d'outils (9). La dimension de la machine (1) selon la direction longitudinale (D1) peut ainsi être réduite en position de transport.

Ainsi que représentée sur la figure 1, la machine (1) est préférentiellement employée en combinaison avec un équipement frontal (31) attelé à l'avant du tracteur (2). L'espacement (E) est la distance entre chaque groupe d'outils (9) et le plan médian (M). Le réglage de la distance entre le groupe d'outils (9) et son axe de pliage (12) permet également d'adapter l'espacement (E), par exemple à la largeur de l'équipement frontal (31).

Ainsi que représenté sur la figure 2, les bielles (27, 28, 29) respectives sont parallèles entre elles en projection sur un plan perpendiculaire au plan médian (M) et parallèle à la direction longitudinale (D1). Chaque quadrilatère de recouvrement est ainsi un parallélogramme, ce qui permet de conserver la longueur (L) sensiblement orthogonale à la direction longitudinale (D1).

Dans un mode de réalisation non représenté, chaque moyen de liaison (26) entre un groupe d'outils (9) et son bras (10) est réalisé par une simple liaison pivot d'axe sensiblement parallèle à l'axe de pliage (12).

Dans le mode de réalisation préféré, chaque bras (10) comporte une potence (33) et un culbuteur (34) respectifs. Chaque potence (33) est articulée avec le basculeur (13) autour de l'axe de pliage (12) respectif, et reliée avec le groupe d'outils (9) respectif par le moyen de liaison (26) respectif. Chaque culbuteur (34) est articulé avec le basculeur (13) respectif autour de l'axe de pliage (12) respectif. Les deux culbuteurs (34) sont reliés par un raccord (35) de sorte à répartir la pression exercée par les groupes d'outils (9) sur le sol (S).

Chaque bras (10) comporte un actionneur de transport (36) articulé avec la potence (33) respective d'une part et avec le culbuteur (34) respectif d'autre part, de préférence autour d'axes parallèles à l'axe de pliage (12). En position de travail du groupe d'outils (9) respectif, la longueur de l'actionneur de transport (36) est maintenue fixe, de sorte que le bras (10) est rigide. Chaque culbuteur (34) est articulé avec le basculeur (13) autour d'un axe parallèle à l'axe de pliage (12), et de préférence autour de l'axe de pliage (12) respectif.

L'animation de la machine (1) se traduit par l'entrainement en rotation des rotors (19) d'au moins un groupe d'outils (9). Cette animation de la machine (1) est réalisée par la prise de force (non représentée) du tracteur (2). D'autres sources motrices (électriques, hydrauliques...) sont cependant envisageables.

L'invention porte également sur un procédé pour transposer les unités latérales (4) d'une machine (1) agricole entre une position de travail et une position de transport, et de préférence vice-versa. Pour simplifier la rédaction, on appelle dans ce document « transposition », la transposition d'au moins une unité latérale (4) entre sa position de travail et sa position de transport.

La transposition comporte une étape consistant à pivoter les unités latérales (4), par rapport au châssis (3), autour de l'axe de basculement (14) selon un angle transitoire, de préférence compris entre 75° et 145°, plus préférentiellement entre 85° et 115°, et plus préférentiellement encore entre 90° et 100°. Le pivotement d'une unité latérale (4) selon l'angle transitoire est effectué jusqu'à une position où son extrémité arrière (23) est sur le dessus. L'extrémité arrière (23) est la partie située à l'arrière d'une unité latérale (4) en position de travail. Lors du pivotement de l'unité latérale (4) selon l'angle transitoire, l'extrémité arrière (23) pivote vers le haut, et de préférence vers l'avant. Le pivotement de l'unité latérale (4) selon l'angle transitoire aboutit à la position transitoire de l'unité latérale (4) respective tel que représenté sur la figure 7. Ce pivotement aboutit à une position dans laquelle l'axe de pliage (12) respectif forme, en vue latérale, un angle avec la direction longitudinale (D1) compris entre 45° et 90°, et de préférence entre 75° et 90°.

Le pivotement du ou d'un basculeur (13) autour de l'axe de basculement (14) selon l'angle transitoire transmet son pivotement à au moins une unité latérale (4), et de préférence aux deux. Dans le mode de réalisation préféré, le pivotement de l'unité latérale (4) selon l'angle transitoire est réalisé après son pivotement selon l'angle de manœuvre.

La transposition comporte également une étape consistant à pivoter chaque unité latérale (4), par rapport au châssis (3), autour de l'axe de pliage (12) respectif selon un angle majeur de préférence compris entre 80° et 140° et plus préférentiellement entre 100° et 120°. Lors du pivotement d'une unité latérale (4) selon l'angle majeur, l'unité latérale (4) concernée pivote dans la direction opposée au bras (10), autour de l'axe de pliage (12). Lors du pivotement de l'unité latérale (4) selon l'angle majeur son extrémité extérieure (25) pivote, de préférence vers l'arrière, jusqu'à une position dans laquelle, la longueur (L) et la largeur (B) d'un groupe d'outils (9) sont sensiblement parallèles au plan médian (M). L'extrémité extérieure (25) est la partie située à l'extérieur d'une unité latérale (4) en position de travail. Il peut être prévu que le pivotement d'une unité latérale (4) selon l'angle majeur aboutisse à une position dans laquelle la longueur (L) d'un groupe d'outils (9) forme avec le plan médian (M), un angle compris entre 0° et 25° et plus précisément encore entre 0° et 5°.

L'actionneur de transport (36) est agencé de manière à opérer le pivotement de l'unité latérale (4) respective selon l'angle majeur. De préférence, le pivotement de l'unité latérale (4) selon l'angle majeur est réalisé à la suite du pivotement de ladite unité latérale (4) selon l'angle transitoire. Dans un mode de réalisation simple, la transposition d'une unité latérale (4) entre sa position de travail et sa position de transport comporte uniquement les pivotements de l'unité latérale (4) selon l'angle majeur et selon l'angle transitoire.

Dans le mode de réalisation préféré, les pivotements de l'unité latérale (4) selon l'angle majeur et selon l'angle transitoire sont au moins partiellement simultanés, de préférence au moins lors de la phase finale (temporelle) du pivotement de l'unité latérale (4) selon l'angle transitoire, ce qui permet d'éviter que les unités latérales (4) ne heurtent le sol (S) lors de la transposition, tout en écourtant cette dernière. Le fait que les unités latérales (4) ne pivotent pas autour de leur axe de pliage (12) respectif tant que le basculeur (13) n'a pas atteint une certaine orientation par rapport au sol (S), à savoir au moins 60°, de préférence 70°, et plus préférentiellement encore 80°, permet d'éviter que les unités latérales (4) ne heurtent le sol (S) lors de leur pivotement autour de leur axe de pliage (12) respectif.

Afin d'éviter tout contact entre les groupes d'outils (9) et le sol (S) lorsque la machine (1) est déplacée (qu'elle soit animée ou non) il est prévu que chaque unité latérale (4), respectivement groupe d'outils (9), puisse occuper une position de manœuvre. Ainsi qu'il ressort de la figure 5, l'extrémité extérieure (25) d'un groupe d'outils (9) en position de manœuvre est plus éloignée du sol (S) que son extrémité intérieure (24).

La transposition peut comporter une étape consistant à pivoter au moins une unité latérale (4), et de préférence les deux, par rapport au châssis (3), autour de l'axe de pliage (12) respectif selon un angle de manœuvre, de préférence compris entre 5° et 45°, et plus préférentiellement encore entre 10° et 20°, de manière à aboutir à sa position de manœuvre. On notera que le pivotement d'une unité latérale (4) selon l'angle de manœuvre est distinct du pivotement de cette unité latérale (4) selon l'angle majeur.

Un actionneur de manœuvre (40) est articulé avec chaque culbuteur (34) et avec le châssis (3), respectivement le basculeur (13), de préférence autour d'axes parallèles à l'axe de pliage (12). Une variation de la longueur de l'actionneur de manœuvre (40) fait pivoter l'unité latérale (4) respective autour de l'axe de pliage (12) respectif. Lors du pivotement d'une unité latérale (4) selon l'angle de manœuvre, l'unité latérale (4) concernée pivote en direction du bras (10) autour de l'axe de pliage (12). Le pivotement d'une unité latérale (4) selon l'angle de manœuvre permet de la transférer entre sa position de travail et sa position de manœuvre. Dans le mode de réalisation préféré, le pivotement de l'unité latérale (4) selon l'angle de manœuvre est l'étape de la transposition réalisée en premier, respectivement réalisée avant le pivotement de l'unité latérale (4) selon l'angle transitoire. Dans ce mode de réalisation préféré, lorsqu'une unité latérale (4) a terminé ses pivotements selon l'angle de manœuvre, selon l'angle transitoire et selon l'angle majeur, elle occupe une position intermédiaire.

Dans le mode de réalisation simple, depuis la position de travail, les pivotements d'une unité latérale (4) selon les angles transitoire et majeur peuvent aboutir à sa position de transport, la position intermédiaire étant la position de transport.

Afin de transférer une partie du poids d'un groupe d'outils (9) vers les roues (7), il peut être avantageusement prévu que chaque unité latérale (4) prenne appui sur un socle (41) en position de transport. Le socle (41) est solidaire du châssis (3), et de préférence situé au-dessus des roues (7) en vue latérale de la machine (1).

A cet effet, la transposition peut comporter une étape, de préférence la dernière, consistant à pivoter une unité latérale (4), de préférence les deux, par rapport au châssis (3), autour de l'axe de basculement (14) selon un angle ultime, de préférence inférieur à 30°, et plus préférentiellement inférieur à 15°. Suite au pivotement de l'unité latérale (4) selon l'angle ultime, celle-ci repose sur les socles (41). L'actionneur transitoire (16) permet d'effectuer le pivotement de l'unité latérale (4) selon l'angle ultime. On notera que le pivotement d'une unité latérale (4) selon l'angle ultime est distinct du pivotement de cette unité latérale (4) selon l'angle transitoire.

Dans le mode de réalisation préféré, le pivotement de l'unité latérale (4) selon l'angle ultime est réalisé depuis sa position intermédiaire. Suite au pivotement de l'unité latérale (4) selon l'angle ultime, l'unité latérale (4) se trouve dans la position de transport représentée sur la figure 3. En position de transport des unités latérales (4), chaque extrémité arrière (23) est orientée vers le haut.

La hauteur (H) d'un groupe d'outils (9) en position de transport est orientée sensiblement perpendiculairement au plan médian (M). La largeur (15) en position de transport des unités latérales (4) est déterminée par la somme des hauteurs (H) des groupes d'outils (9). La hauteur (H) étant la plus petite des trois dimensions d'un groupe d'outils (9), la largeur (15) est avantageusement réduite en position de transport.

La transposition peut comporter une étape consistant à déplacer chaque groupe d'outils (9) par rapport au bras (10) respectif par une translation dont au moins une composante est orientée selon la hauteur (H) du groupe d'outils (9) respectif, de préférence réalisée dans la position de manœuvre de l'unité latérale (4) correspondante. Grâce à cette translation, la largeur (15) est davantage réduite en position de transport. En outre, en position de transport des unités latérales (4), la distance entre chaque groupe d'outils (9) et le plan médian (M) est répétable.

La transposition peut comporter une étape consistant à déplacer chaque groupe d'outils (9) par rapport au bras (10) respectif par une translation dont au moins une composante est orientée selon la longueur (L) du groupe d'outils (9) respectif. De cette manière, la position des groupes d'outils (9) en position de transport selon la direction longitudinale (D1) est répétable. La translation d'une unité latérale (4) dont au moins une composante est orientée selon la longueur (L) est de préférence réalisée dans la position de manœuvre de l'unité latérale (4), évitant l'endommagement du tapis végétal du sol (S). Grâce à cette translation, la longueur de la machine (1) est réduite en position de transport.

On note qu'il est possible d'effectuer les transpositions des deux unités latérales (4) entre leur position de travail et leur position de transport respectives simultanément. Il est également possible qu'une seule unité latérale (4) effectue le pivotement de manœuvre de manière à atteindre une position de travail partielle. Dans la position de travail partielle, une unité latérale (4) est en position de travail et l'unité latérale (4) opposée en position de manœuvre.

Les actionneurs (16, 30, 32, 36, 40) sont de préférence réalisés par des vérins hydrauliques reliés au circuit hydraulique du tracteur (2), et commandés de préférence par le système hydraulique du tracteur (2). Ils peuvent cependant également être réalisés sous la forme de vérins pneumatiques, et/ou de moteurs hydrauliques ou électriques, ou encore sous la forme de ressorts.

Le transfert d'une unité latérale (4) entre sa position de transport et sa position de travail est opéré de préférence en opérant les étapes à l'inverse et dans l'ordre contraire à la transposition d'une unité latérale (4) de sa position de travail à sa position de transport.

La machine qui vient d'être décrite, n'est qu'un exemple de réalisation qui ne saurait limiter le domaine de protection défini par les revendications suivantes.

## Revendications

1. Machine (1) agricole de fauchage permettant de faucher des végétaux sur pieds, destinée à être attelée à un tracteur (2) et comportant deux unités latérales (4) et un châssis (3) qui s'étend dans une direction longitudinale (D1) et est muni de deux roues (7), chaque unité latérale (4) étant montée pivotante par rapport au châssis (3) via une articulation longitudinale (11) respective autour d'un axe de pliage (12) respectif parallèle à un plan médian (M) du châssis (3), chaque unité latérale (4) comportant un groupe d'outils (9) relié au châssis (3) par un bras (10) respectif et pouvant occuper une position de travail dans laquelle elle prend appui sur le sol (S) et dans laquelle la longueur (L) du groupe d'outils (9) respectif s'étend transversalement à la direction longitudinale (D1), chaque unité latérale (4) pouvant également occuper une position de transport dans laquelle elle est éloignée du sol (S), et dans laquelle la longueur (L) et la largeur (B) du groupe d'outils (9) respectif sont sensiblement parallèles au plan médian (M), chaque groupe d'outils (9) comportant au moins un dispositif de fauche (18) équipé d'une pluralité de rotors (19) entrainés en rotation autour d'axes sensiblement verticaux, la machine comportant au moins un basculeur (13) articulé avec le châssis (3) autour d'au moins un axe de basculement (14) orienté transversalement à la direction longitudinale (D1), chaque unité latérale (4) étant montée sur ledit basculeur (13) par le biais de l'articulation longitudinale (11) respective, et, dans la position de transport des unités latérales (4), chaque groupe d'outils (9) étant plus proche du plan médian (M) que le bras (10) respectif, **caractérisée en ce que** chaque groupe d'outils (9) comporte au moins un groupeur (21) situé, vu dans le sens d'avance (A) et dans la position de travail, derrière le groupe de fauche (18), chaque groupeur (21) étant situé au dessus du groupe d'outils (9) respectif en position de transport.

2. Machine agricole selon la revendication 1, **caractérisée en ce qu'**elle comporte un basculeur (13) commun aux deux unités latérales (4).

3. Machine agricole selon l'une des revendications 1 à 2, **caractérisée en ce que** l'axe de basculement (14) est situé devant les articulations longitudinales (11), au moins en position de travail des groupes d'outils (9).

4. Machine agricole selon l'une des revendications 1 à 3, **caractérisée en ce que** chaque groupe d'outils (9) est couvert, au moins partiellement, par une protection (17) dans sa position de travail et qu'en position de transport des groupes d'outils (9), les protections (17) sont situées sur les faces externes de la machine (1).

5. Machine agricole selon l'une des revendications 1 à 4, **caractérisée en ce que** chaque unité latérale (4) comporte un moyen de liaison (26) respectif qui relie le groupe d'outils (9) au bras (10) et qui comporte au moins deux bielles (27, 28, 29) et au moins un actionneur (30, 32).

## Patentansprüche

1. Landwirtschaftliche Mähmaschine (1) zum Mähen von stehenden Pflanzen, die zum Anbau an einen Traktor (2) bestimmt ist und zwei Seiteneinheiten (4) sowie einen Rahmen (3) umfasst, der sich in Längsrichtung (D1) erstreckt und mit zwei Rädern (7) versehen ist, wobei jede Seiteneinheit (4) über ein jeweiliges Längsgelenk (11) um eine jeweilige Klappachse (12), die parallel zu einer Mittelebene (M) des Rahmens (3) verläuft, schwenkbar am Rahmen (3) angebracht ist, wobei jede Seiteneinheit (4) eine Werkzeuggruppe (9) aufweist, die über einen jeweiligen Arm (10) mit dem Rahmen (3) verbunden ist und eine Arbeitsposition einnehmen kann, in der sie auf dem Boden (S) aufliegt und in der sich die Länge (L) der jeweiligen Werkzeuggruppe (9) quer zur Längsrichtung (D1) erstreckt, wobei jede Seiteneinheit (4) zudem eine Transportposition einnehmen kann, in der sie vom Boden (S) abgehoben ist und in der die Länge (L) und die Breite (B) der jeweiligen Werkzeuggruppe (9) im Wesentlichen parallel zur Mittelebene (M) verlaufen, wobei jede Werkzeuggruppe (9) mindestens eine Mähvorrichtung (18) umfasst, die mit einer Vielzahl von Rotoren (19) ausgestattet ist, die um im Wesentlichen vertikale Achsen in Drehung versetzt werden, wobei die Maschine mindestens eine Kippvorrichtung (13) aufweist, die um mindestens eine quer zur Längsrichtung (D1) ausgerichtete Kippachse (14) am Rahmen (3) angelenkt ist, wobei jede Seiteneinheit (4) über das jeweilige Längsgelenk (11) an der Kippvorrichtung (13) angebracht ist, und, in der Transportposition der Seiteneinheiten (4) jede Werkzeuggruppe (9) näher an der Mittelebene als der jeweilige Arm (10) liegt, **dadurch gekennzeichnet, dass** jede Werkzeuggruppe (9) mindestens eine Sammelvorrichtung (21) umfasst, die sich, in Vorwärtsrichtung (A) und in Arbeitsposition gesehen, hinter der Mähvorrichtung (18) befindet, wobei sich jede Sammelvorrichtung (21) in der Transportposition über der jeweiligen Werkzeuggruppe (9) befindet.

2. Landwirtschaftliche Maschine nach Anspruch 1, **dadurch gekennzeichnet, dass** es eine Kippvorrichtung (13) umfasst, die beiden Seiteneinheiten (4) gemeinsam ist.

3. Landwirtschaftliche Maschine nach einem der Ansprüche 1 bis 2, **dadurch gekennzeichnet, dass** sich die Kippachse (14) zumindest in der Arbeitsposition der Werkzeuggruppen (9) vor den Längsgelenken (11) befindet.

4. Landwirtschaftliche Maschine nach einem der Ansprüche 1 bis 3, **dadurch gekennzeichnet, dass** jede Werkzeuggruppe (9) in ihrer Arbeitsposition zumindest teilweise von einer Schutzvorrichtung (17) abgedeckt ist, und dass sich die Schutzvorrichtungen (17) in der Transportposition der Werkzeuggruppen (9) an den Außenseiten der Maschine (1) befinden.

5. Landwirtschaftliche Maschine nach einem der Ansprüche 1 bis 4, **dadurch gekennzeichnet, dass** jede Seiteneinheit (4) eine jeweilige Verbindungseinrichtung (26) aufweist, die die Werkzeuggruppe (9) mit dem jeweiligen Arm (10) verbindet und die mindestens zwei Verbindungsstangen (27, 28, 29) und mindestens einen Aktuator (30, 32) umfasst.

## Claims

1. Agricultural mowing machine (1) for mowing standing plants, designed to be coupled to a tractor (2) and comprising two side units (4) and a chassis (3) which extends in a longitudinal direction (D1) and is fitted with two wheels (7), each side unit (4) being mounted so as to pivot relative to the chassis (3) via a respective longitudinal joint (11) about a respective folding axis (12) parallel to a median plane (M) of the chassis (3), each side unit (4) comprising a tool assembly (9) connected to the chassis (3) by a respective arm (10) and capable of assuming a working position in which it rests on the ground (S) and in which the length (L) of the respective tool assembly (9) extends transversely to the longitudinal direction (D1), each side unit (4) being capable of also assuming a transport position in which it is raised off the ground (S), and in which the length (L) and width (B) of the respective tool assembly (9) are substantially parallel to the median plane (M), each tool assembly (9) comprising at least one mowing device (18) equipped with a plurality of rotors (19) driven in rotation about substantially vertical axes, the machine comprising at least one tilting mechanism (13) articulated to the chassis (3) about at least one tilting axis (14) oriented transversely to the longitudinal direction (D1), each side unit (4) being mounted on the said tilting mechanism (13) via the respective longitudinal joint (11), and, in the transport position of the side units (4), each tool assembly (9) is closer to the median plane (M) than the respective arm (10), **characterised in that** each tool assembly (9) comprises at least one grouping unit (21) located, as viewed in the forward direction (A) and in the working position, behind the mowing device (18), each grouping unit (21) being located above the respective tool assembly (9) in the transport position.

2. Agricultural machine according to claim 1, **characterised in that** it comprises a tilting mechanism (13) common to both side units (4).

3. Agricultural machine according to one of claims 1 to 2, **characterised in that** the tilting axis (14) is located in front of the longitudinal joints (11), at least when the tool assemblies (9) are in the working position.

4. Agricultural machine according to any one of claims 1 to 3, **characterised in that** each tool assembly (9) is at least partially covered by a guard (17) in its working position, and that, when the tool assemblies (9) are in the transport position, the guards (17) are located on the outer surfaces of the machine (1).

5. Agricultural machine according to any one of claims 1 to 4, **characterised in that** each side unit (4) comprises a respective connecting means (26) which connects the tool assembly (9) to the arm (10) and which comprises at least two connecting rods (27, 28, 29) and at least one actuator (30, 32).
